# EUROPEAN PATENT SPECIFICATION

(11) **EP 4 123 260 B1**
(45) Date of publication and mention of the grant of the patent: **02.12.2026**
(21) Application number: 21883023.0
(22) Date of filing: 14.09.2021
(51) Int. Cl.: G01B 21/24, G01B 21/16, B23K 35/10, G01B 21/32

(54) **METHOD FOR INSPECTING WHETHER WELDING ROD IS NORMAL USING A WELDING ROD INSPECTION APPARATUS**
INSPEKTIONSVERFAHREN ZUM ÜBERPRÜFEN OB EINE SCHWEISSELEKTRODE NORMAL IST MITTELS EINER SCHWEISSELEKTRODENINSPEKTIONSVORRICHTUNG
PROCÉDÉ D'INSPECTION POUR DETERMINER SI UNE ÉLECTRODE DE SOUDAGE EST NORMALE UTILISANT UN DISPOSITIF D'INSPECTION D'ÉLECTRODE DE SOUDAGE

(30) Priority: 22.10.2020 KR 20200137690
(43) Date of publication of application: 25.01.2023
(73) Proprietor: LG Energy Solution, Ltd., Seoul 07335 (KR)
(72) Inventor: KIM, Ji Woo, Daejeon 34122 (KR); PARK, Heung Kun, Daejeon 34122 (KR); OH, Jung Ho, Daejeon 34122 (KR); PARK, Hyeong Min, Daejeon 34122 (KR)
(74) Representative: Plasseraud IP
(86) International application number: PCT/KR2021/012515
(87) International publication number: WO 2022/085951

(56) References cited:
- CN-A- 109 855 591
- DE-U1- 9 301 457
- JP-A- 2000 288 733
- JP-A- 2002 005 644
- JP-A- 2007 167 945
- JP-A- 2012 218 025
- JP-A- 2012 218 025
- KR-A- 20160 123 887
- KR-A- 20160 123 887
- KR-B1- 101 278 543
- US-A1- 2005 198 849

## Description

### [Technical Field]

This application claims the benefit of priority to Korean Patent Application No. 2020-0137690 filed on October 22, 2020.

The present invention relates to a welding rod inspection apparatus for measuring whether a welding rod is normal and an inspection method using the same, and more particularly to a welding rod inspection apparatus for measuring whether a welding rod is normal that is capable of measuring whether the welding rod is normal in order to reduce a defect rate occurring at the time of welding work using the welding rod and an inspection method using the same.

### [Background Art]

With recent development of alternative energies due to air pollution and energy depletion caused as the result of use of fossil fuels, demand for secondary batteries capable of storing electrical energy that is produced has increased. The secondary batteries, which are being capable of being charged and discharged, are intimately used in daily life. For example, the secondary batteries are used in mobile devices, electric vehicles, and hybrid electric vehicles.

Required capacities of secondary batteries used as energy sources of various kinds of electronic devices inevitably used in modern society have been increased due to an increase in usage of mobile devices, increasing complexity of the mobile devices, and development of electric vehicles. In order to satisfy demand of users, a plurality of battery cells is disposed in a small-sized device, whereas a battery module including a plurality of battery cells electrically connected to each other or a battery pack including a plurality of battery modules is used in a vehicle.

Meanwhile, a plurality of battery cells is connected to each other in order to provide energy required by a device. At this time, the battery cells are connected to each other by welding using a busbar. As a result, a welding rod with which a plurality of welding operations has been performed may be deformed, for example eccentric, which may lead to defects of a battery module or a battery pack.

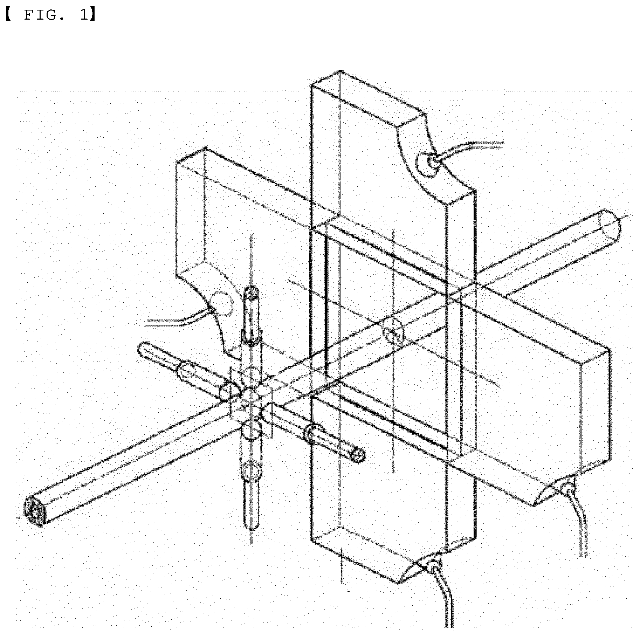

FIG. 1 is a perspective view showing a conventional welding rod eccentricity detection apparatus. As shown in FIG. 1, the conventional welding rod eccentricity detection apparatus includes an eddy current type distance sensor configured to measure the position of a core of a welding rod using electromagnetic induction, a laser position meter configured to measure the position of the welding rod, a measurement controller configured to determine eccentricity of the welding rod based on information detected by the measurement means, and a monitoring circuit.

As can be seen from the above description, the conventional welding rod eccentricity detection apparatus has an advantage in that the eccentric state of the welding rod is checked using the detection apparatus and, when abnormality occurs, the same is reported through the monitoring circuit, whereby it is possible to check the state of the welding rod.

However, the conventional welding rod eccentricity detection apparatus has problems in that the structure of the detection apparatus is complicated, and only the eccentric state of the welding rod is determined, but it is difficult to determine a bending phenomenon of the welding rod or deformation occurring at an end surface of the welding rod, such as wear.

### (Prior Art Documents)

Examples of background art can be found in Japanese Patent Application Publication No. 2002-005644 and further in US2005/198849A1, DE9301457U1, JP2002005644A, KR20160123887A, JP2012218025A, CN109855591A.

### [Disclosure]

### [Technical Problem]

The present invention has been made in view of the above problems, and it is an object of the present invention to provide a welding rod inspection apparatus that has a simple structure and is capable of inspecting the eccentric state of a welding rod and various kinds of deformation of the welding rod, such as bending and wear, thereby maintaining a predetermined level of welding quality, and an inspection method using the same.

### [Technical Solution]

In order to accomplish the above object, a welding rod inspection method as defined in the independent claim 1 is provided.

The plurality of measurement units include a first measurement unit (100) including a first contact portion (110) and a first support shaft (120), and a second measurement unit (200) including a second contact portion (210) and a second support shaft (220), and the pressure sensor is mounted in each of the first contact portion (110) and the second contact portion (210).

Each of the first contact portion (110) and the second contact portion (210) may be formed in a conical shape having a width gradually decreasing towards a top of each of the first contact portion and the second contact portion.

Each of the first contact portion (110) and the second contact portion (210) may have an oval shape that is long up and down.

Each of the first contact portion (110) and the second contact portion (210) may have a cylindrical shape.

The distance (L1) between the first contact portion (110) and the second contact portion (210) when brought into close contact with the lower end of the welding rod (400) may be equal to or less than the diameter (L2) of the welding rod.

When the pressures of the first measurement unit (100) and the second measurement unit (200) deviate from a predetermined range, a determination may be made that the welding rod is abnormal.

Also, in the inspection method using the welding rod inspection apparatus according to the present invention, when each of the pressures of the first measurement unit (100) and the second measurement unit (200) exceeds 0 Pa and a difference in the pressure between the first measurement unit (100) and the second measurement unit (200) deviates from a predetermined range, a determination may be made that the welding rod is bent or an end surface of the welding rod is deformed.

When one of the pressures of the first measurement unit (100) and the second measurement unit (200) exceeds 0 Pa and the other pressure is 0 Pa, a determination may be made that the welding rod is eccentric.

### [Advantageous Effects]

As is apparent from the above description, a welding rod inspection apparatus for measuring whether a welding rod is normal according to the present invention and an inspection method using the same have a merit in that a pair of measurement units spaced apart from each other by a predetermined distance and pressure sensors are provided, whereby the structure of the welding rod inspection apparatus is very simple.

In addition, the welding rod inspection apparatus for measuring whether the welding rod is normal according to the present invention and the inspection method using the same have an advantage in that it is possible to determine whether the welding rod is bent or an end surface of the welding rod is deformed as well as eccentricity of the welding rod, whereby it is possible to reduce a welding defect rate of a battery module or a battery pack.

### [Description of Drawings]

FIG. 1 is a perspective view showing a conventional welding rod eccentricity detection apparatus.
FIG. 2 is a perspective view of a welding rod inspection apparatus according to a first preferred embodiment of the present invention.
FIG. 3 is a sectional view of the welding rod inspection apparatus taken along line A-A' of FIG. 2.
FIG. 4 is a sectional view of a welding rod inspection apparatus according to a second preferred embodiment of the present invention.
FIG. 5 is a sectional view of a welding rod inspection apparatus according to a third preferred embodiment of the present invention.
FIG. 6 is a sectional view showing checking whether a welding rod is eccentric using the welding rod inspection apparatus according to the present invention.
FIG. 7 is a sectional view showing checking a bending phenomenon of a welding rod using the welding rod inspection apparatus according to the present invention.
FIG. 8 is a sectional view showing checking a deformed state of the end surface of a welding rod using the welding rod inspection apparatus according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a welding rod inspection apparatus for measuring whether a welding rod is normal according to the present invention and an inspection method using the same will be described with reference to the accompanying drawings.

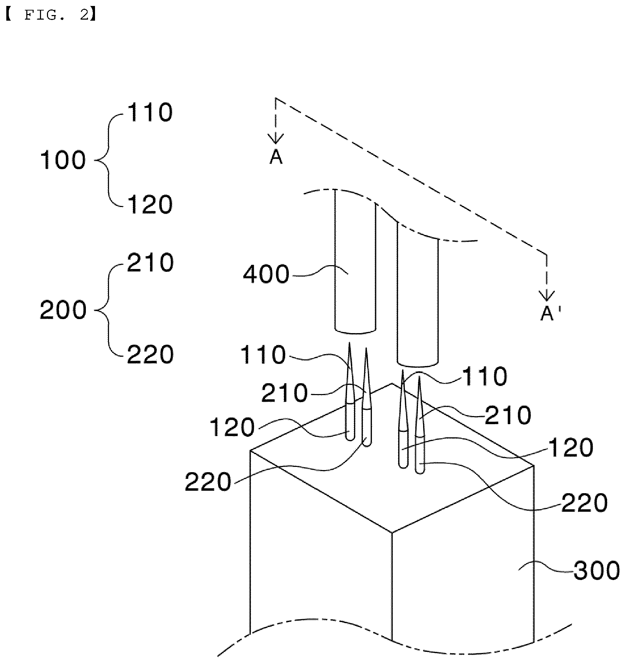

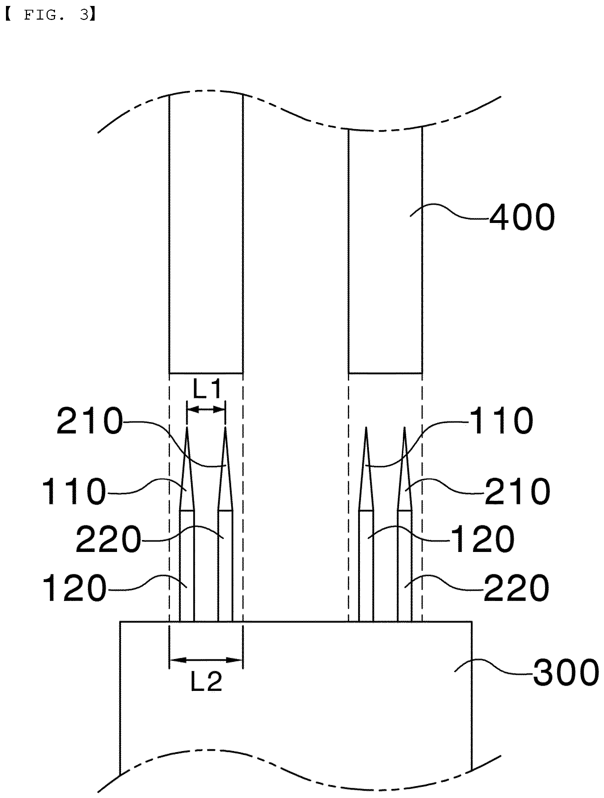

FIG. 2 is a perspective view of a welding rod inspection apparatus according to a first preferred embodiment of the present invention, and FIG. 3 is a sectional view of the welding rod inspection apparatus taken along line A-A' of FIG. 2.

Referring to FIGS. 2 and 3, the welding rod inspection apparatus according to the present invention includes a first measurement unit 100, a second measurement unit 200, and a support die 300.

In the attached drawings, two measurement units, each of which includes a first measurement unit 100 and a second measurement unit 200, are located side by side, which, however, is merely an example. Three or more measurement units may be continuously arranged in a state of being spaced apart from each other by a predetermined distance.

First, the first measurement unit 100 includes a first contact portion 110 and a first support shaft 120 configured to support the first contact portion 110.

The first contact portion 110 is a portion that comes into close contact with a lower end of a welding rod 400 at the time of inspection. As an example, the first contact portion may be formed in a conical shape having a width gradually decreasing towards a top of each of the first contact portion and the second contact portion.

Here, a pressure sensor (not shown) configured to measure pressure when the first contact portion 110 comes into close contact with the welding rod 400 is mounted in the first contact portion 110.

The first support shaft 120 is connected to the support die 300 in a state of being located under the first contact portion 110. The first measurement unit 100, which is constituted by the first contact portion 110 and the first support shaft 120, is capable of being moved in a vertical direction by a known driving means (not shown).

Next, the second measurement unit 200 includes a second contact portion 210 and a second support shaft 220 configured to support the second contact portion 210.

Here, the second contact portion 210 and the second support shaft 220 are identical in construction to the first contact portion 110 and the first support shaft 120, respectively, and therefore a duplicate description thereof will be omitted.

Next, the support die 300 will be described. The support die 300 is located under the first measurement unit 100 and the second measurement unit 200, and supports the first measurement unit 100 and the second measurement unit 200. Meanwhile, a driving means (not shown) configured to move the first measurement unit and the second measurement unit upwards and downwards in the vertical direction is mounted in the support die.

Although not shown in the drawings, therefore, it is obvious that the support die 300 is provided therein with a space in which the first measurement unit 100 and the second measurement unit 200 are moved upwards and downwards and the driving means is received.

The first measurement unit 100 and the second measurement unit 200 located so as to protrude above the support die 300 are spaced apart from each other by a predetermined distance in order to constitute a single measurement unit. At this time, it is preferable for the distance L1 between the upper ends of the first contact portion 110 and the second contact portion 120, i.e. the ends of the first contact portion and the second contact portion that abut the welding rod 400, to be equal to or less than the diameter L2 of the welding rod such that eccentricity of the welding rod 400, a bending phenomenon of the welding rod, or whether the end surface of the welding rod is deformed can be determined.

Meanwhile, in the claimed invention, the pressure sensor is mounted in the contact portion.

For example, in non-claimed embodiments, the pressure sensor may be provided at the support shaft, may be provided between the contact portion and the support shaft, or may be provided at a lower end of the support shaft.

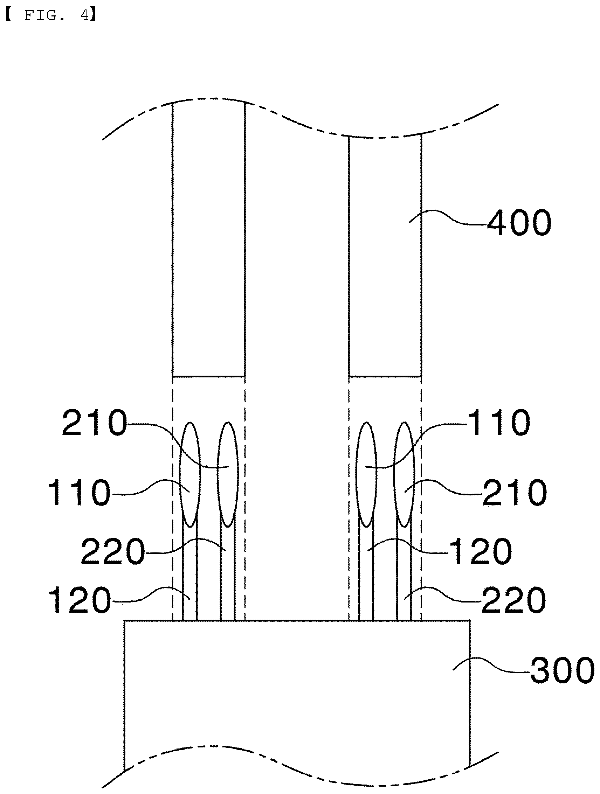

FIG. 4 is a sectional view of a welding rod inspection apparatus according to a second preferred embodiment of the present invention. Referring to FIG. 4, the welding rod inspection apparatus according to the second embodiment is identical to the welding rod inspection apparatus according to the first embodiment described with reference to FIGS. 2 and 3 except that the shape of each of the first contact portion 110 and the second contact portion 210 is an oval shape that is long up and down, and therefore a description of the same construction will be omitted.

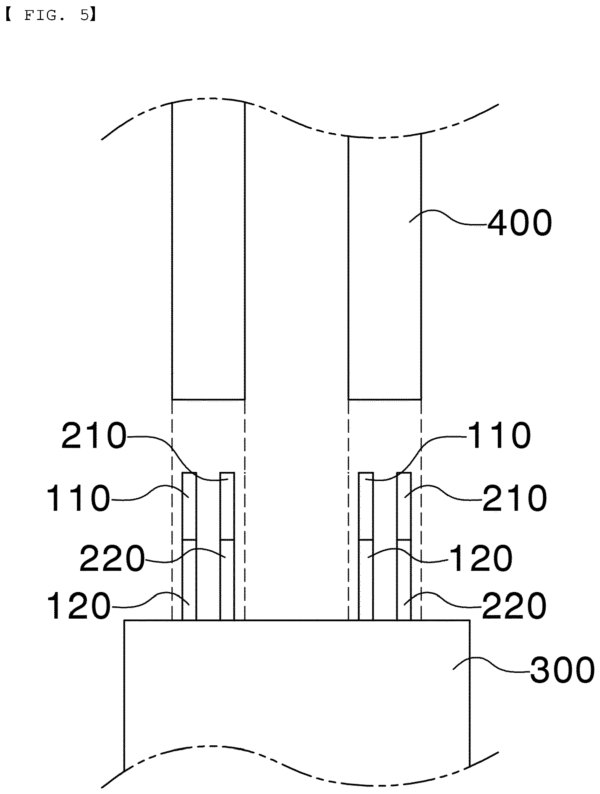

FIG. 5 is a sectional view of a welding rod inspection apparatus according to a third preferred embodiment of the present invention. Referring to FIG. 5, the welding rod inspection apparatus according to the third embodiment is identical to the welding rod inspection apparatus according to the first embodiment described with reference to FIGS. 2 and 3 except that the shape of each of the first contact portion 110 and the second contact portion 210 is an oval cylindrical shape, and therefore a description of the same construction will be omitted.

Next, a method of inspecting a welding rod using the welding rod inspection apparatus according to the present invention will be described.

An inspection method of determining whether a welding rod is normal according to the present invention includes a first step of locating the first measurement unit 100 and the second measurement unit 200 at predetermined coordinates, a second step of locating a welding rod vertically above the first measurement unit 100 and the second measurement unit 200, a third step of moving the first measurement unit 100 and the second measurement unit 200 or the welding rod 400 to a predetermined position in a vertical direction, a fourth step of measuring pressures of the first measurement unit 100 and the second measurement unit 200, and a fifth step of determining whether the welding rod 400 is normal based on the result of measurement.

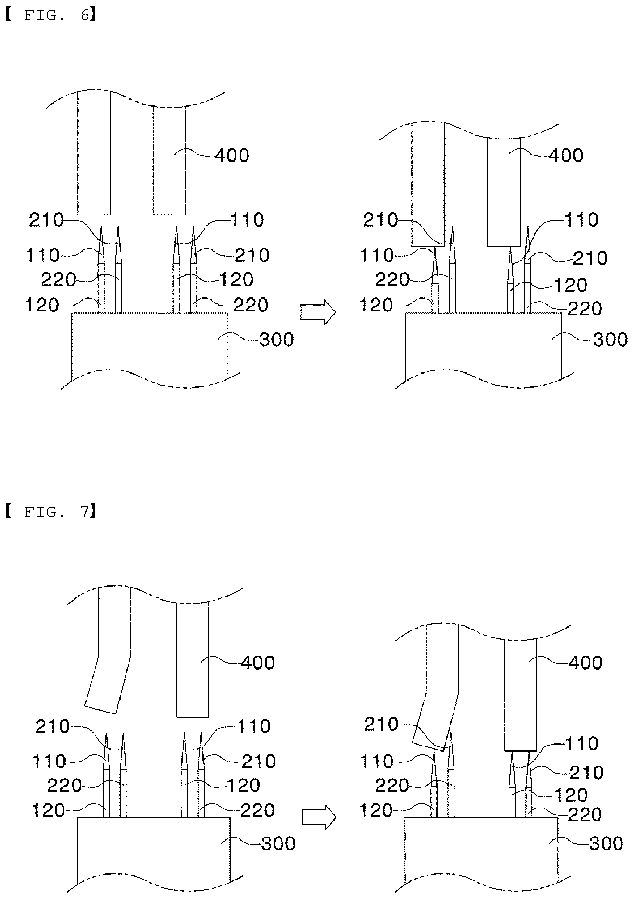

FIG. 6 is a sectional view showing checking whether a welding rod is eccentric using the welding rod inspection apparatus according to the present invention. A method of checking whether welding rod is eccentric will be described with reference to FIG. 6. After the first measurement unit 100 and the second measurement unit 200 are located at predetermined coordinates, the first measurement unit 100 and the second measurement unit 200 are moved upwards until the first measurement unit 100 and the second measurement unit 200 come into tight contact with a lower end surface of the welding rod 400.

When pressures measured by the first measurement unit 100 and the second measurement unit 200 are equal to each other or are different from each other within an error range, a determination is made that the welding rod 400 is normal.

However, when one of the pressures of the first measurement unit 100 and the second measurement unit 200 exceeds 0 Pa and the other pressure is 0 Pa, a determination may be made that the welding rod 400 is eccentric, and therefore a process of readjusting the coordinates of the welding rod 400 is performed.

Meanwhile, in the above description, the first measurement unit 100 and the second measurement unit 200 are moved for inspection in the state in which the welding rod 400 is stationary. Alternatively, the welding rod 400 may be moved downwards for inspection in the state in which the first measurement unit 100 and the second measurement unit 200 are stationary, or the first measurement unit 100, the second measurement unit 200, and the welding rod 400 may be simultaneously moved in the vertical direction for inspection.

FIG. 7 is a sectional view showing checking a bending phenomenon of a welding rod using the welding rod inspection apparatus according to the present invention, and

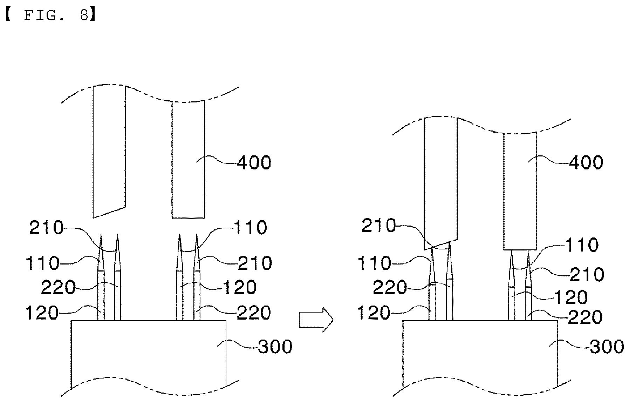

FIG. 8 is a sectional view showing checking a deformed state of the end surface of a welding rod using the welding rod inspection apparatus according to the present invention.

A method of checking a bending phenomenon of a welding rod or whether the end surface of a welding rod is deformed will be described with reference to FIGS. 7 and 8. After the first measurement unit 100 and the second measurement unit 200 are located at predetermined coordinates, the first measurement unit 100 and the second measurement unit 200 are moved upwards until the first measurement unit 100 and the second measurement unit 200 come into tight contact with a lower end surface of the welding rod 400.

When pressures measured by the first measurement unit 100 and the second measurement unit 200 are equal to each other or are different from each other within an error range, a determination is made that the welding rod 400 is normal.

However, when one of the pressures of the first measurement unit 100 and the second measurement unit 200 exceeds 0 Pa and the other pressure is 0 Pa, a determination may be made that the welding rod 400 is eccentric, and therefore the welding rod 400 is replaced or an end surface grinding process is performed.

Those skilled in the art to which the present invention pertains will appreciate that various applications and modifications are possible within the scope of the claimed invention.

### (Description of Reference Symbols)

100: First measurement unit
110: First contact portion
120: First support shaft
200: Second measurement unit
210: Second contact portion
220: Second support shaft
300: Support die
400: Welding rod
L1: Distance between first contact portion and second contact portion
L2: Diameter of welding rod

## Claims

1. A method of inspecting whether the welding rod (400) is normal using a welding rod inspection apparatus comprising:
a plurality of measurement units (100, 200) configured to be brought into close contact with an end surface of the welding rod (400); and
a support die (300) configured to support the plurality of measurement units (100, 200),
wherein the plurality of measurement units (100, 200) are located so as to be spaced apart from each other by a predetermined distance, and
wherein each of the plurality of measurement units (100, 200) is provided with a pressure sensor configured to measure a pressure transmitted to each of the measurement units (100, 200),
wherein the plurality of measurement units comprise:
a first measurement unit (100) comprising a first contact portion (110) and a first support shaft (120); and
a second measurement unit (200) comprising a second contact portion (210) and a second support shaft (220), and
wherein the pressure sensor is mounted in each of the first contact portion (110) and the second contact portion (210),
the method comprising:
locating the first measurement unit (100) and the second measurement unit (200) at predetermined coordinates;
locating the welding rod (400) vertically above the first measurement unit (100) and the second measurement unit (200) ;
moving the first measurement unit (100) and the second measurement unit (200) or the welding rod (400) to a predetermined position in a vertical direction such that in the case of a normal welding rod the plurality of measurement units (100, 200) are brought into close contact with an end surface of the welding rod (400);
measuring pressures of the first measurement unit (100) and the second measurement unit (200); and
determining whether the welding rod (400) is normal based on the result of the step of measuring pressures.

2. The method according to claim 1, wherein each of the first contact portion (110) and the second contact portion (210) is formed in a conical shape having a width gradually decreasing towards a top of each of the first contact portion (110) and the second contact portion (210).

3. The method according to claim 1, wherein each of the first contact portion (110) and the second contact portion (210) has an oval shape, wherein the long axis of the oval shape is parallel with a longitudinal axis of the first contact portion (110) and the second contact portion (210).

4. The method according to claim 1, wherein each of the first contact portion (110) and the second contact portion (210) has a cylindrical shape.

5. The method according to claim 1, wherein a distance (L1) between the first contact portion (110) and the second contact portion (210) when brought into close contact with the end surface of the welding rod (400) is equal to or less than a diameter of the welding rod (L2).

6. The method according to claim 1, wherein, when the pressures of the first measurement unit (100) and the second measurement unit (200) deviate from a predetermined range, a determination is made that the welding rod (400) is abnormal.

7. The method according to claim 6, wherein, when each of the pressures of the first measurement unit (100) and the second measurement unit (200) exceeds 0 Pa and a difference in the pressure between the first measurement unit (100) and the second measurement unit (200) deviates from a predetermined range, a determination is made that the welding rod (400) is bent or an end surface of the welding rod (400) is deformed.

8. The method according to claim 6, wherein, when one of the pressures of the first measurement unit (100) and the second measurement unit (200) exceeds 0 Pa and the other pressure is 0 Pa, a determination is made that the welding rod (400) is eccentric.

## Patentansprüche

1. Verfahren zum Prüfen, ob der Schweißstab (400) normal ist, unter Verwendung einer Schweißstab-Prüfvorrichtung, umfassend:
eine Vielzahl von Messeinheiten (100, 200), die so eingerichtet sind, dass sie in engen Kontakt mit einer Stirnfläche des Schweißstabs (400) gebracht werden; und
eine Stützform (300), die so eingerichtet ist, dass sie die Vielzahl von Messeinheiten (100, 200) stützt,
wobei die Vielzahl von Messeinheiten (100, 200) so angeordnet sind, dass sie durch einen vorbestimmten Abstand voneinander beabstandet sind, und
wobei jede der Vielzahl von Messeinheiten (100, 200) mit einem Drucksensor versehen ist, der so eingerichtet ist, dass er einen auf jede der Messeinheiten (100, 200) übertragenen Druck misst,
wobei die Vielzahl von Messeinheiten umfassen:
eine erste Messeinheit (100), die einen ersten Kontaktabschnitt (110) und eine erste Stützwelle (120) umfasst; und
eine zweite Messeinheit (200), die einen zweiten Kontaktabschnitt (210) und eine zweite Stützwelle (220) umfasst, und
wobei der Drucksensor in jedem des ersten Kontaktabschnitts (110) und des zweiten Kontaktabschnitts (210) montiert ist,
das Verfahren umfassend:
Anordnen der ersten Messeinheit (100) und der zweiten Messeinheit (200) an vorbestimmten Koordinaten;
Anordnen des Schweißstabs (400) vertikal oberhalb der ersten Messeinheit (100) und der zweiten Messeinheit (200);
Bewegen der ersten Messeinheit (100) und der zweiten Messeinheit (200) oder des Schweißstabs (400) in eine vorbestimmte Position in einer vertikalen Richtung, sodass im Falle eines normalen Schweißstabs die Vielzahl von Messeinheiten (100, 200) in engen Kontakt mit einer Stirnfläche des Schweißstabs (400) gebracht werden;
Messen von Drücken der ersten Messeinheit (100) und der zweiten Messeinheit (200); und
Bestimmen, ob der Schweißstab (400) normal ist, basierend auf dem Ergebnis des Schritts des Messens von Drücken.

2. Verfahren nach Anspruch 1, wobei jeder des ersten Kontaktabschnitts (110) und des zweiten Kontaktabschnitts (210) in einer konischen Form ausgebildet ist, die eine Breite aufweist, die zu einer Spitze jedes des ersten Kontaktabschnitts (110) und des zweiten Kontaktabschnitts (210) hin allmählich abnimmt.

3. Verfahren nach Anspruch 1, wobei jeder des ersten Kontaktabschnitts (110) und des zweiten Kontaktabschnitts (210) eine ovale Form aufweist, wobei die Längsachse der ovalen Form parallel zu einer Längsachse des ersten Kontaktabschnitts (110) und des zweiten Kontaktabschnitts (210) ist.

4. Verfahren nach Anspruch 1, wobei jeder des ersten Kontaktabschnitts (110) und des zweiten Kontaktabschnitts (210) eine zylindrische Form aufweist.

5. Verfahren nach Anspruch 1, wobei ein Abstand (L1) zwischen dem ersten Kontaktabschnitt (110) und dem zweiten Kontaktabschnitt (210), wenn sie in engen Kontakt mit der Stirnfläche des Schweißstabs (400) gebracht werden, gleich oder kleiner als ein Durchmesser des Schweißstabs (L2) ist.

6. Verfahren nach Anspruch 1, wobei, wenn die Drücke der ersten Messeinheit (100) und der zweiten Messeinheit (200) von einem vorbestimmten Bereich abweichen, eine Bestimmung getroffen wird, dass der Schweißstab (400) anormal ist.

7. Verfahren nach Anspruch 6, wobei, wenn jeder der Drücke der ersten Messeinheit (100) und der zweiten Messeinheit (200) 0 Pa überschreitet und eine Druckdifferenz zwischen der ersten Messeinheit (100) und der zweiten Messeinheit (200) von einem vorbestimmten Bereich abweicht, eine Bestimmung getroffen wird, dass der Schweißstab (400) gebogen ist oder eine Stirnfläche des Schweißstabs (400) verformt ist.

8. Verfahren nach Anspruch 6, wobei, wenn einer der Drücke der ersten Messeinheit (100) und der zweiten Messeinheit (200) 0 Pa überschreitet und der andere Druck 0 Pa beträgt, eine Bestimmung getroffen wird, dass der Schweißstab (400) exzentrisch ist.

## Revendications

1. Procédé d'inspection pour déterminer si la baguette de soudure (400) est normale en utilisant un appareil d'inspection de baguette de soudure comprenant :
une pluralité d'unités de mesure (100, 200) configurées pour être amenées en contact étroit avec une surface d'extrémité de la baguette de soudure (400) ; et
une matrice de support (300) configurée pour supporter la pluralité d'unités de mesure (100, 200),
dans lequel la pluralité d'unités de mesure (100, 200) sont situées de manière à être espacées les unes des autres d'une distance prédéterminée, et
dans lequel chacune de la pluralité d'unités de mesure (100, 200) est pourvue d'un capteur de pression configuré pour mesurer une pression transmise à chacune des unités de mesure (100, 200),
dans lequel la pluralité d'unités de mesure comprennent :
une première unité de mesure (100) comprenant une première partie de contact (110) et un premier axe de support (120) ; et
une seconde unité de mesure (200) comprenant une seconde partie de contact (210) et un second axe de support (220), et
dans lequel le capteur de pression est monté dans chacune de la première partie de contact (110) et de la seconde partie de contact (210),
le procédé comprenant :
la localisation de la première unité de mesure (100) et de la seconde unité de mesure (200) à des coordonnées prédéterminées ;
la localisation de la baguette de soudure (400) verticalement au-dessus de la première unité de mesure (100) et de la seconde unité de mesure (200) ;
le déplacement de la première unité de mesure (100) et de la seconde unité de mesure (200) ou de la baguette de soudure (400) jusqu'à une position prédéterminée dans une direction verticale de telle sorte que, dans le cas d'une baguette de soudure normale, la pluralité d'unités de mesure (100, 200) sont amenées en contact étroit avec une surface d'extrémité de la baguette de soudure (400) ;
la mesure des pressions de la première unité de mesure (100) et de la seconde unité de mesure (200) ; et
la détermination si la baguette de soudure (400) est normale sur la base du résultat de l'étape de mesure des pressions.

2. Procédé selon la revendication 1, dans lequel chacune de la première partie de contact (110) et de la seconde partie de contact (210) est formée selon une forme conique ayant une largeur diminuant progressivement vers un sommet de chacune de la première partie de contact (110) et de la seconde partie de contact (210).

3. Procédé selon la revendication 1, dans lequel chacune de la première partie de contact (110) et de la seconde partie de contact (210) a une forme ovale, dans lequel l'axe longitudinal de la forme ovale est parallèle à un axe longitudinal de la première partie de contact (110) et de la seconde partie de contact (210).

4. Procédé selon la revendication 1, dans lequel chacune de la première partie de contact (110) et de la seconde partie de contact (210) a une forme cylindrique.

5. Procédé selon la revendication 1, dans lequel une distance (L1) entre la première partie de contact (110) et la seconde partie de contact (210) lorsqu'elles sont amenées en contact étroit avec la surface d'extrémité de la baguette de soudure (400) est égale ou inférieure à un diamètre de la baguette de soudure (L2).

6. Procédé selon la revendication 1, dans lequel, lorsque les pressions de la première unité de mesure (100) et de la seconde unité de mesure (200) s'écartent d'une plage prédéterminée, une détermination est faite que la baguette de soudure (400) est anormale.

7. Procédé selon la revendication 6, dans lequel, lorsque chacune des pressions de la première unité de mesure (100) et de la seconde unité de mesure (200) dépasse 0 Pa et qu'une différence de pression entre la première unité de mesure (100) et la seconde unité de mesure (200) s'écarte d'une plage prédéterminée, une détermination est faite que la baguette de soudure (400) est pliée ou qu'une surface d'extrémité de la baguette de soudure (400) est déformée.

8. Procédé selon la revendication 6, dans lequel, lorsque l'une des pressions de la première unité de mesure (100) et de la seconde unité de mesure (200) dépasse 0 Pa et que l'autre pression est de 0 Pa, une détermination est faite que la baguette de soudure (400) est excentrée.
